Europäisches Patentamt

European Patent Office

Office européen des brevets

(19)

(11) Numéro de publication : **0 408 438 B1**

(12) **FASCICULE DE BREVET EUROPEEN**

(45) Date de publication du fascicule du brevet :
**02.02.94 Bulletin 94/05**

(51) Int. Cl.[5] : **G01N 11/00**, G01N 22/00

(21) Numéro de dépôt : **90401977.5**

(22) Date de dépôt : **09.07.90**

(54) **Dispositif micro-onde pour la mesure en continu de la viscosité d'un milieu visqueux.**

(30) Priorité : **11.07.89 FR 8909307**

(43) Date de publication de la demande :
**16.01.91 Bulletin 91/03**

(45) Mention de la délivrance du brevet :
**02.02.94 Bulletin 94/05**

(84) Etats contractants désignés :
**DE GB IT**

(56) Documents cités :
**DD-A- 219 870**
**PHYSICS IN MEDECINE AND BIOLOGY, vol. 31, no. 9, septembre 1986, LONDON, GB, pages 1031-1040; S. RAY et al: "Microwave absorption in lossy liquids"**
**JOURNAL OF PHYSICS E. SCIENTIFIC INS-TRUMENTS, vol. 20, no. 7, juillet 1987, ISHING, BRISTOL, GB, pages 872-877; M.C. STEEL et al: "Precision waveguide cells for the measu-rement of complex permittivity of lossy liquids and biological tissue at 35 GHz"**

(56) Documents cités :
**IEEE TRANSACTIONS ON INSTRUMENTA-TION AND MEASUREMENT, vol. IM-34, no. 3, septembre 1985, NEW YORK, US, pages 417-421; M. MARTINELLI et al: "A method for dynamic dielectric measurements at micro-wave frequencies: applications to polymeriza-tion process studies"**
**ELECTRONIC ENGINEERING, vol. 59, no. 730, octobre 1987, LONDON, GB, pages 85, 89-90, 93-94 ; G. PARKINSON : "Broad tuning range VCOs for microwave systems"**

(73) Titulaire : **AEROSPATIALE Société Nationale Industrielle**
**37, Boulevard de Montmorency**
**F-75781 Paris Cédex 16 (FR)**

(72) Inventeur : **Lacombe, Jean-Francis**
**96, avenue Anatole France**
**F-33160 Saint Medard-en-Jalles (FR)**
Inventeur : **Miane, Jean-Louis**
**Domaine de la voie romaine, 3, rue E. Degas**
**F-33600 Pessac (FR)**

(74) Mandataire : **Mongrédien, André et al**
**c/o SOCIETE DE PROTECTION DES INVENTIONS 25, rue de Ponthieu**
**F-75008 Paris (FR)**

EP 0 408 438 B1

Jouve, 18, rue Saint-Denis, 75001 PARIS

## Description

La présente invention a pour objet un dispositif micro-onde industriel pour la mesure en continu et en temps réel de la viscosité d'un milieu visqueux.

L'invention peut être utilisée pour mesurer la viscosité de tous les milieux liquides polaires et en particulier de tous les polymères contenant des éléments dipolaires. Plus spécialement, l'invention permet de contrôler en continu l'évolution de la viscosité des résines utilisées pour la fabrication des matériaux composites haute performance, au cours de leur polymérisation et/ou réticulation. Ces matériaux composites sont utilisés pour la réalisation de pièces dans les domaines automobile, aéronautique et spatial.

En particulier, l'invention s'applique à des résines phénoliques, polyuréthane, polyester, époxy et des polymères contenant des éléments dipolaires par exemple des groupements $>C=O$, $>C-OH$, $>C-NH-$.

Dans le domaine des matériaux composites, on utilise très fréquemment des substrats (constitués de fibre de carbone, d'aramide, de verre ou de Kevlar) qui peuvent être imprégnés d'une résine dans une chaîne d'imprégnation, calibrant le pourcentage de résine. Pour maîtriser la qualité du produit, l'imprégnation de ce substrat est réalisée avec une résine à viscosité constante. La viscosité de la résine étant liée à sa température, il est souhaitable de piloter la température de la résine au cours de cette étape d'imprégnation en fonction de sa viscosité.

L'invention a justement pour objet un dispositif micro-onde comportant un capteur qui peut être immergé dans le milieu visqueux à mesurer associé à une électronique pour traiter le signal produit par le capteur afin de suivre l'évolution en temps réel de la viscosité de la résine. Un tel système peut s'intégrer facilement dans une installation et permettre l'automatisation du processus de fabrication des matériaux composites à l'aide d'un asservissement en température en fonction de la viscosité de la résine. L'implantation du capteur de mesure dans le milieu visqueux à contrôler assure un contrôle en temps réel et in situ de la viscosité.

Bien que le dispositif de mesure soit tout à fait bien adapté au contrôle de la viscosité d'une résine utilisée pour la fabrication de matériaux composites, le dispositif de l'invention peut être utilisé dans tous les domaines nécessitant le contrôle en continu d'un milieu visqueux polaire.

De façon traditionnelle, la viscosité des huiles ou de tout autre liquide visqueux est mesurée à l'aide de tubes capillaires en verre ou bien à l'aide d'une série d'entonnoirs ayant une certaine constante dite coefficient, correspondant à leur calibrage. Le principe est basé sur le temps que met une certaine quantité de liquide pour s'écouler librement entre deux repères. Cette technique est en particulier décrite dans le document FR-A-2 604 271.

La viscosité d'un liquide visqueux peut aussi être mesurée à l'aide d'un viscosimètre rotatif tel que décrit dans le document FR-A-2 587 115 nécessitant un prélèvement du liquide à étudier dans un récipient adapté dans lequel tourne une palette ou un cylindre. Le principe de la mesure est basé sur la détermination du couple lié à la force de cisaillement du produit visqueux entre la palette ou le cylindre tournant et la paroi du récipient.

Ces dispositifs ne permettent nullement un contrôle en continu et en temps réel d'un produit visqueux étant donné que la mesure de la viscosité se fait par prélèvement d'un échantillon. Dans le cadre de la fabrication des matériaux composites, ce prélèvement d'échantillon entraîne nécessairement l'arrêt de la fabrication et l'intervention d'un opérateur.

Il est connu par le document IEEE Transactions on Instrumentation and Measurement IM-34 (1985) septembre n°3 de M.Martinelli et al., p.417-421, un dispositif micro-onde pour analyser l'état de polymérisation d'une résine nécessitant encore un prélèvement d'échantillon et ne permettant donc pas l'analyse en continu, in situ. Ce dispositif comporte une cavité résonnante destinée à contenir l'échantillon et une source micro-onde asservie à la fréquence de résonance de la cavité.

Il est par ailleurs connu du document DD-A-219870 un système de détermination en continu de l'état de conversion des polycondensats de phénolformaldéhydes par mesure de l'amortissement et/ou de la réflexion de micro-ondes par les polycondensats, utilisant une antenne émettrice et une antenne réceptrice située de part et d'autre du réacteur de polycondensation.

L'invention a justement pour objet un dispositif micro-onde industriel pour la mesure en continu et en temps réel de la viscosité d'un milieu visqueux permettant notamment de remédier aux inconvénients ci-dessus. En particulier, le dispositif de l'invention comporte un capteur capable d'être immergé dans le milieu visqueux dont on veut mesurer la viscosité et de donner une mesure en temps réel, sans effectuer de prélèvement, ce qui lui confère une bonne adaptation à une application industrielle, tout en donnant des résultats précis et reproductibles comme les viscosimètres de l'art antérieur.

Par ailleurs, le dispositif de l'invention est simple à fabriquer et son exploitation ou mise en oeuvre est aisée. Enfin, le capteur le constituant est peu encombrant.

De façon plus précise, l'invention a pour objet un dispositif de mesure en continu de la viscosité d'un milieu visqueux polaire comportant une source micro-onde, un capteur de mesure comportant essentiellement au moins un câble coaxial micro-onde semi-rigide destiné à être immergé dans le milieu et des moyens de connexion, ce câble étant constitué d'une enveloppe externe et d'une âme conductrices de l'électricité et disposées coaxialement, l'espace défini entre l'enveloppe et l'âme étant rempli d'un diélectrique, l'âme comportant une extrémité dénudée destinée à être placée au contact du milieu visqueux et formant une boucle magnétique fermée en court-circuit avec l'enveloppe externe, ce capteur étant destiné à engendrer dans ce milieu des micro-ondes incidentes de puissance donnée et à détecter la puissance des micro-ondes réfléchies par le milieu, un détecteur pour transformer la puissance des micro-ondes réfléchies en un signal électrique qui est une fonction croissante de la viscosité, un premier guide micro-onde pour coupler la source micro-onde au capteur et un second guide micro-onde pour coupler le détecteur au capteur.

L'avantage d'une mesure diélectrique est d'avoir un capteur simple, non mobile, d'entretien facile et qui peut suivre en particulier l'ensemble de la polymérisation, y compris la phase de réticulation, lorsque la résine est durcie.

Par extrémité dénudée, il faut comprendre une extrémité dépourvue de diélectrique et de conducteur externe.

Le capteur de l'invention présente une dimension réduite et en particulier un diamètre externe inférieur à 5 mm fonctionnant dans une grande gamme de fréquences par exemple allant de 2 à 18 GHz.

La fréquence utilisée est fonction du milieu visqueux à analyser et en particulier de sa permittivité.

Le fait de dénuder l'extrémité de âme destinée à être placée au contact du milieu visqueux à contrôler assure un bon couplage hyperfréquence entre le capteur et le milieu.

Il est connu par le document Physics in Medecine and Biology, vol. 31, n°9, septembre 1986, p. 1031-1040 de S. Ray et J. Behari un capteur coaxial rectiligne pour mesurer les permittivités de solutions ioniques en biologie. La méthode utilisée est une méthode de laboratoire, non transférable en milieu industriel. Elle utilise des mesures d'impédance complexe à partir desquelles on recalcule la permittivité complexe grâce à un analyseur de réseaux, la résolution des calculs étant assurée par un mini-ordinateur.

L'utilisation de la boucle magnétique présente un certain nombre d'avantages. En effet, la dimension de la boucle magnétique permet d'avoir une meilleure adaptation à une fréquence donnée (soit une sensibilité maximum à cette fréquence de travail).

De plus, avec la boucle, la meilleure interaction capteur/milieu permet d'obtenir une réponse plus stable (puissance réfléchie en fonction de la fréquence micro-onde). Enfin, le comportement mécanique du capteur avec boucle magnétique est moins fragile grâce à sa meilleure rigidité.

La longueur de l'extrémité dénudée est fonction du milieu visqueux à étudier et en particulier de sa permittivité. A titre d'exemple, pour une fréquence d'utilisation de 2 à 4 GHz, la longueur de l'extrémité dénudée est comprise entre 2 et 2,5 cm et est utilisée pour des matériaux ayant de faibles permittivités diélectriques (par exemple voisines de celle de l'air). Pour des permittivités diélectriques plus élevées, en particulier comme celles des résines époxy, généralement utilisées pour la fabrication des matériaux composites, on utilise plutôt une fréquence de 9 à 10 GHz. Dans ce cas, la longueur optimum de l'extrémité dénudée de l'âme du câble coaxial est de 10 mm ± 2 mm.

Le capteur du dispositif conforme à l'invention peut comporter deux câbles coaxiaux accolés, l'un servant à véhiculer les micro-ondes incidentes et l'autre à véhiculer les micro-ondes transmises par le milieu dont on mesure la viscosité. Toutefois, il est préférable d'utiliser un seul et unique câble coaxial afin d'améliorer le couplage micro-onde entre le capteur et le milieu dont on mesure la viscosité.

Les matériaux constituant le capteur de l'invention doivent être compatibles chimiquement avec le milieu à analyser et en particulier être chimiquement résistants par rapport à ce milieu.

Dans le cas d'une résine époxy ou du glycérol, on utilise avantageusement un capteur comportant une âme et une enveloppe externe en cuivre éventuellement protégées par argenture ou chromage.

Le matériau constituant le diélectrique peut être n'importe quel diélectrique classiquement utilisé en hyper-fréquence. Toutefois, afin d'obtenir une impédance de 50 ohms adaptable ainsi sur la plupart des dispositifs de mesure utilisant des micro-ondes, on utilise du polytétrafluoroéthylène généralement connu sous la marque "Téflon".

Le principe de la mesure de la viscosité est basé sur la puissance des micro-ondes réfléchies par le milieu visqueux, cette réflexion des micro-ondes étant due au brusque changement d'impédance provoqué par la discontinuité entre la structure coaxiale du capteur et le milieu à contrôler. Par ailleurs, la puissance des micro-ondes réfléchies par le milieu visqueux est fonction de la permittivité de ce milieu, permittivité qui dépend de la température à laquelle se trouve le milieu. En outre, pour une résine, la permittivité dépend de son état de polymérisation. A température donnée, la permittivité de la résine décroît au fur et à mesure que la résine polymérise.

A température donnée, on peut donc à partir de l'évolution du signal micro-onde réfléchi suivre l'état de viscosité de la résine au cours de sa polymérisation.

Le capteur du dispositif conforme à l'invention étant immergé dans le milieu dont on veut mesurer la viscosité, on a un volume d'interaction parfaitement défini par la forme de l'extrémité du capteur et qui est donc toujours le même.

Le capteur du dispositif conforme à l'invention, démonté puis remonté, donne toujours le même signal. En outre deux capteurs construits sur le même modèle donnent aussi le même signal. Ceci implique que le capteur conforme à l'invention est fiable dans le temps.

La particularité de l'invention réside dans la mesure de la puissance micro-onde réfléchie conduisant à un dispositif de mesure simple et peu coûteux. Par exemple, une mesure de phase nécessiterait des analyseurs de réseaux et appareils de laboratoire coûteux.

En outre, l'invention s'applique à des milieux visqueux donc plus ou moins liquides (état de prégélification avant polymérisation). Le mode de réticulation n'intervient pas dans la mesure (qu'il soit radicalaire ou ionique). De plus, le mode d'accrochage des molécules et les éléments polaires de celles-ci n'interviennent pas dans la mesure de polymérisation.

Avantageusement, ce dispositif de mesure comprend en outre un isolateur et un atténuateur de la puissance micro-onde, connectés entre la source micro-onde et le coupleur directif. Ceci permet une normalisation des conditions de fonctionnement des dispositifs de l'invention, indispensable dans une utilisation industrielle.

De plus, le dispositif de mesure comporte un filtre pour filtrer le signal électrique délivré par le détecteur.

D'autres caractéristiques et avantages de l'invention ressortiront mieux de la description qui va suivre, donnée à titre illustratif et non limitatif, en référence aux dessins annexés dans lesquels :

- les figures 1 et 2 représentent des capteurs dont l'extrémité dénudée est rectiligne.
- les figures 3 et 4 représentent différents modes de réalisation du capteur coaxial conforme à l'invention,
- la figure 5 représente schématiquement un dispositif de mesure en continu de la viscosité d'un milieu polaire conforme à l'invention.
- la figure 6 donne les variations de la viscosité en fonction de la tension délivrée par l'ensemble de détection du dispositif de mesure de l'invention pour du glycérol, et
- les figures 7 et 8 donnent es courbes illustrant la sensibilité du capteur en fonction de la fréquence micro-onde lors de la mesure de la viscosité d'une résine époxy.

Avant de décrire les différents modes de réalisation du capteur de l'invention, on va donner le principe physique mis en jeu dans l'invention.

Les propriétés diélectriques des milieux liquides dépendent de la structure des molécules qui les constituent : des liquides non polaires comme le benzène ont une permittivité réelle et indépendante de la fréquence de mesure ; le milieu n'absorbe pas les micro-ondes et sa permittivité ne dépend que de la température ou de la pression, par l'intermédiaire de la dilatation du milieu.

Au contraire, lorsque les molécules possèdent un moment dipolaire permanent, la permittivité du milieu est fonction de la fréquence de mesure du fait des phénomènes de relaxation : le mouvement des dipôles moléculaires est entravé par les interactions entre molécules.

L'eau est un exemple d'un tel milieu : aux basses fréquences, elle possède une permittivité élevée (égale à 81), et la relaxation dipolaire apparaît dans le domaine de GHz, avec un maximum d'absorption vers 20 GHz à température ambiante. Ce phénomène est caractérisé par un temps de relaxation t, et un modèle simple (modèle de DEBYE) permet d'exprimer la permittivité du milieu en fonction de ce temps de relaxation soit $t = K\eta$ où K est une constante caractéristique du milieu.

La mobilité des dipôles dépend de leur environnement et tout changement dans celui-ci se traduit par des modifications des temps de relaxation et de la permittivité. Ainsi, la permittivité d'un liquide polaire dépend de sa viscosité. En conséquence, on peut remplacer une mesure de viscosité par une mesure de permittivité à une fréquence située dans un des domaines de relaxation du liquide.

Les résines thermodurcissables sont des milieux plus complexes parce que les formulations utilisées contiennent en général plusieurs sortes de molécules : oligomères de différentes masses, durcisseurs, adjuvants. Néanmoins, les molécules constituant le mélange portent des segments dipolaires qui seront à l'origine de relaxations en haute fréquence et hyperfréquence.

L'état macroscopique d'une résine peut se caractériser par sa viscosité qui est fonction de la température et de la masse moyenne des molécules. La viscosité est une conséquence des interactions moléculaires, et une variation de viscosité est donc une manifestation des variations dans les possibilités de mouvement dipolaire et par conséquent des temps de relations.

Ces diverses dépendances vont s'exprimer par un ensemble de relations entre viscosité, température, masse moyenne, temps de relaxation et permittivité.

A partir de ces relations, il est possible d'exprimer la permittivité d'une résine en fonction de sa viscosité ; cependant, cette relation est très complexe et les termes intermédiaires tels que masse moyenne ou temps de relaxation sont mal définis et difficiles à mesurer. Il est donc plus rapide de déterminer expérimentalement la relation permittivité/viscosité.

Cette détermination doit être refaite pour chaque résine ou formulation.

La mesure de la permittivité d'un milieu visqueux se fait en laboratoire par des méthodes en guide ou en cavité sur des échantillons. Mais ces méthodes se prêtent mal à une utilisation industrielle. C'est pourquoi les inventeurs ont développé des capteurs et dispositifs de structure simple qui ne permettent pas une mesure de la permittivité, mais qui donnent une information (coefficient de réflexion ou de transmission) directement liée à la permittivité du milieu et à sa viscosité.

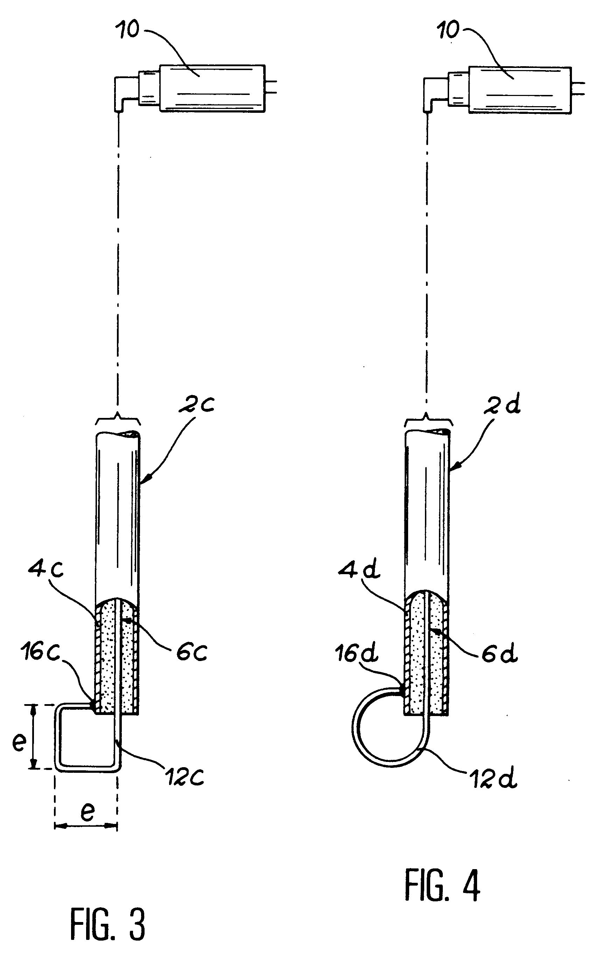

Différents modes de réalisation du capteur de l'invention sont représentés sur les figures 3 et 4.

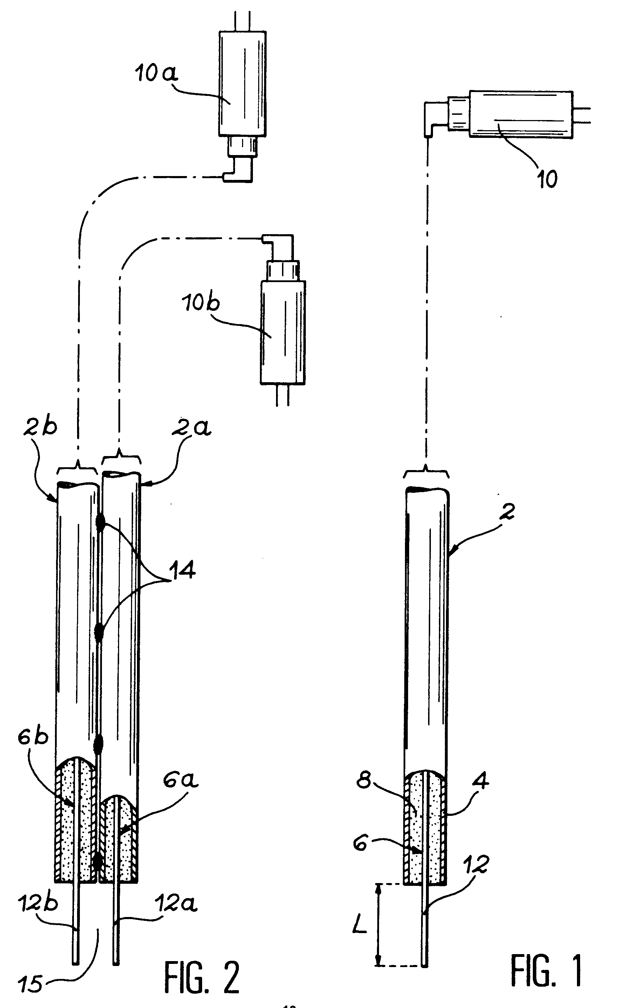

Le capteur représenté sur la figure 1 est constitué d'un câble 2 coaxial micro-onde semi-rigide formé d'une enveloppe externe 4 conductrice de l'électricité et d'une âme 6 aussi conductrice de l'électricité, de forme cylindrique et disposées coaxialement. L'espace séparant l'enveloppe externe 4 et l'âme 6 est rempli d'un diélectrique 8.

Pour la mesure de la viscosité d'une résine époxy ou du glycérol, l'enveloppe externe 4 et l'âme 6 sont réalisées en particulier en cuivre ou en acier chemisé par du cuivre et le diélectrique 8 est du Téflon.

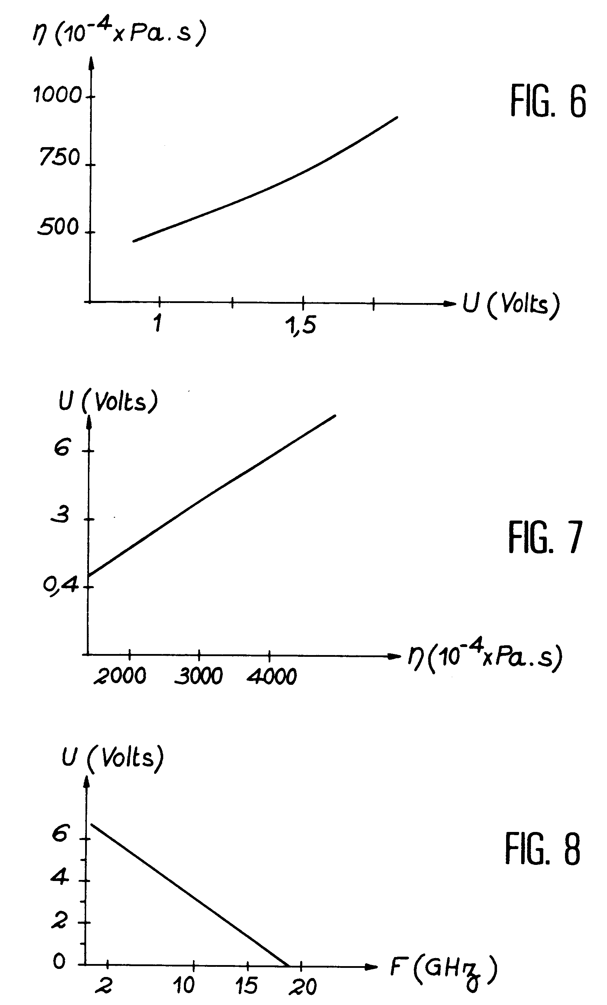

Le câble 2 est de petit diamètre afin d'être immergé dans le milieu à contrôler. Il présente un diamètre $\leq$ à 5 mm et en particulier égal à 3,5 mm. Ce câble coaxial est un câble standard, utilisé en hyper-fréquence et l'une de ses extrémités est équipée d'un connecteur 10 de type connu, assurant son montage dans un dispositif de mesure hyper-fréquence, tel que représenté sur la figure 8.

Selon l'invention, l'âme 6 de l'extrémité 12 du câble 2, opposée au connecteur 10, est dénudée sur une longueur L, qui peut varier de 5 à 10 mm suivant le milieu à contrôler. Autrement dit, l'extrémité 12 du câble 2 ne comporte ni diélectrique ni enveloppe externe.

Sur le mode de réalisation de la figure 1, l'extrémité dénudée 12 du capteur est rectiligne.

Ce capteur, équipé d'un seul câble coaxial 2 fonctionne en réflexion : la mesure est une mesure de puissance micro-onde réfléchie ou de pouvoir réflecteur

$$R = \frac{\text{Puissance réfléchie}}{\text{Puissance incidente}}$$

Avec une extrémité dénudée de 7 mm de long et une fréquence micro-onde de 4 GHz, on obtient Pr=$|0,15|^2$Po dans le glycérol avec Pr = puissance micro-onde réfléchie et Po = puissance micro-onde incidente.

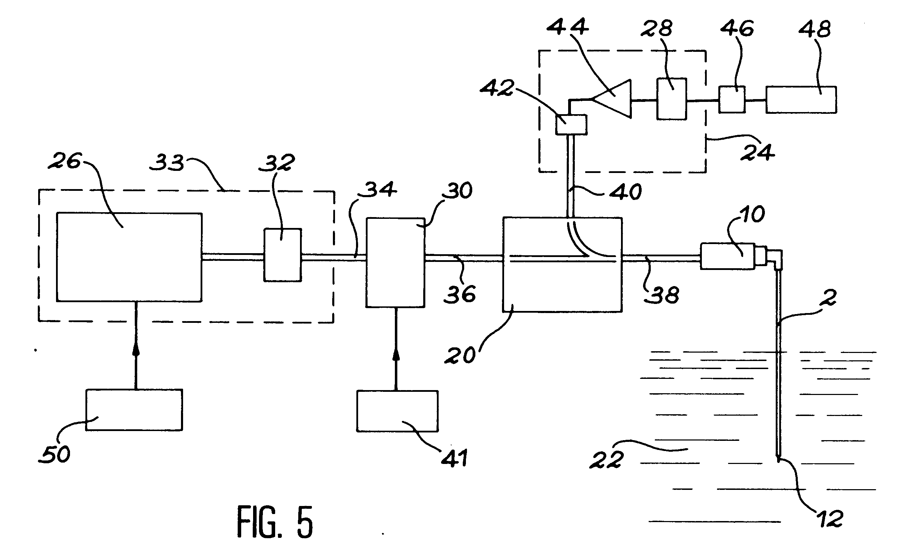

A l'aide d'un coupleur directif 20 (figure 5), une partie de la puissance micro-onde réfléchie par le milieu 22 est dérivée vers un ensemble détecteur micro-onde 24 qui délivre une tension proportionnelle à la puissance micro-onde réfléchie.

La structure de la figure 1 se heurte à la difficulté suivante : si l'on utilise une source hyper-fréquence 26 (figure 5) fonctionnant à une fréquence fixe Fo, - un oscillateur à résonateur diélectrique par exemple -, toute fluctuation de la fréquence se traduit par une fluctuation de la puissance mesurée due aux interférences et réflexions parasites dans le montage.

Pour lever cette difficulté, il suffit d'utiliser une source balayable en fréquence et en faisant une moyenne de la puissance détectée sur l'intervalle de fréquence balayée à l'aide d'un filtre 28 de type RC (figure 5). Le fonctionnement de la source 26 peut être normalisé en plaçant un court-circuit à la place du capteur 2 et en réglant le niveau du signal détecté à une valeur de référence à l'aide d'un atténuateur réglable 30 (figure 5).

La structure de la figure 1 a l'avantage de pouvoir être utilisée dans les cas où la polymérisation de la résine se poursuit jusqu'au durcissement ; le capteur reste récupérable. Dans le cas où le cuivre pourrait interagir avec la matière dans laquelle il est placé, il est possible de chromer ou d'argenter le câble coaxial 2 pour protéger le cuivre.

Le capteur peut, comme représenté sur la figure 2 être constitué de deux câbles coaxiaux micro-onde 2a, 2b identiques en tout point au câble coaxial 2 de la figure 1 et équipés chacun d'un connecteur respectivement 10a et 10b. Ces câbles sont disposés côte à côte et soudés par des soudures 14 réparties sur toute leur longueur de façon à former un ensemble solidaire.

Ce capteur fonctionne en transmission, c'est-à-dire que le signal micro-onde incident est véhiculé par l'un des deux câbles 2a ou 2b et que le signal micro-onde réfléchi par le milieu visqueux est reçu par l'autre câble 2b ou 2a.

Ce mode de fonctionnement en transmission permet d'utiliser des sources micro-onde 26 (figure 5) monochromatiques sans que l'on soit gêné par les interférences qui apparaissent en réflexion sur les différentes connexions micro-onde du dispositif de mesure de la viscosité. En contre-partie, le capteur de la figure 2 présente un volume plus grand que celui de la figure 1 et ne peut pas être utilisé avec des liquides très visqueux du fait que ces liquides ne peuvent pas circuler dans l'espace 15 séparant les deux extrémités 12a et 12b sensibles.

Le capteur de l'invention peut être réalisé comme représenté sur les figures 3 et 4. Ces structures sont obtenues en courbant l'extrémité dénudée et sensible 12c (figure 3) ou 12d (figure 4) d'un câble coaxial micro-onde 2c ou 2d, identique en tout point à celui de la figure 1, pour former une boucle magnétique ; cette boucle magnétique qui peut être carrée (figure 3) ou circulaire (figure 4) est fermée. A cet effet, le bout de l'âme 6c ou 6d, respectivement du capteur 2c et 2d est soudé sur l'enveloppe conductrice 4c ou 4d à l'aide d'une soudure à l'étain respectivement 16c, 16d.

La surface de la boucle est un élément d'adaptation du capteur de la même façon que la longueur L des extrémités dénudées 12 des structures précédentes. En particulier, le côté e de la boucle magnétique carrée (figure 3) est compris entre 2 et 5 mm.

Comme la structure de la figure 1, les structures des figures 3 et 4 fonctionnent en réflexion avec les mêmes contraintes que celles de la figure 1, c'est-à-dire qu'il faut les associer à une source balayable en fréquence et filtrer le signal détecté pour obtenir la puissance réfléchie moyenne sur l'intervalle de fréquence balayé. Ces structures ont l'avantage de présenter une meilleure sensibilité que celle de la figure 1, du fait d'un meilleur couplage hyper-fréquence entre le capteur et le milieu visqueux.

Avec une boucle magnétique de 28 mm² de surface et une fréquence micro-onde de 4 GHz, on obtient Pr= $|0,28|$ ²Po dans le glycérol avec Pr et Po représentant respectivement la puissance micro-onde réfléchie et incidente.

Le capteur décrit ci-dessus fait partie, comme on l'a vu précédemment, d'un dispositif de mesure représenté schématiquement sur la figure 5 et comportant essentiellement une source hyper-fréquence (ou micro-onde) 26, des éléments de contrôle tels qu'un isolateur 32 et un atténuateur 30, un coupleur directif ou un circulateur 20 dans le cas de mesures en réflexion et un ensemble de détection 24.

Des guides micro-ondes 34, 36, 38 et 40 assurent le couplage micro-onde respectivement entre la source et l'atténuateur ; entre l'atténuateur et le coupleur directif ; entre le coupleur directif et le connecteur 10 du capteur et entre le coupleur et l'ensemble de détection.

On décrit, ci-après, les spécifications propres à chacun de ces éléments.

1) - La source hyperfréquence 26 :

Des sources à l'état solide, diodes Gunn ou oscillateurs à transistor conviennent parfaitement bien à ce type de mesure. Elles présentent les avantages suivants : une facilité d'alimentation (10 ou 15 volts continus), une bonne stabilité (la puissance fournie reste constante à mieux que 1% dans des conditions normales d'utilisation) et une durée de vie importante.

Ces sources existent sous deux formes :

- les oscillateurs à résonateur diélectrique qui délivrent des puissances de quelques dizaines de mW à une fréquence fixe, choisie à la commande,
- les oscillateurs contrôlés par YIG (diode hyper-fréquence bien connue de l'homme de l'art en grenat d'Yttrium et de fer) ou varactors qui peuvent fonctionner sur des bandes de fréquence plus ou moins larges (quelques centaines de MHz pour le contrôle par varactor, plusieurs GHz pour le contrôle par YIG). La commande de ces sources se fait par une tension 0-10 volts à l'aide d'un générateur BF de fonction 50.

Dans l'invention, on utilise de préférence un oscillateur contrôlé par YIG. Ceci permet de choisir une fréquence moyenne de fonctionnement dans une bande assez large - par exemple 2-8 GHz, 8-12 GHz ou 12-18 GHz - et d'avoir une modulation en fréquence sur une bande de 1 GHz pour obtenir, en détection, un signal moyen qui n'est pas affecté par les réflexions parasites. Cette modulation est produite par une rampe de tension d'amplitude convenable et de fréquence qui peut varier de 10 Hz à 1 KHz. De plus, ce type de fonctionnement rend le signal de mesure peu sensible aux fluctuations de la source (fluctuations des tensions d'alimentation ou des conditions de modulation).

2) - L'isolateur 32 est un élément indispensable, qui est introduit dans le boîtier source symbolisé par les tirets 33. Son rôle est de protéger la source des réflexions créées dans le circuit hyper-fréquence complet lorsqu'on démonte le capteur par exemple. Il permet d'avoir un fonctionnement de la source indépendant de ce qui se passe dans le reste du circuit, en particulier du niveau de réflexion en bout de circuit. (Le coefficient de réflexion devient égal à 1 si l'on démonte le capteur).

3) - L'atténuateur 30 a pour rôle de modifier la puissance micro-onde incidente et par conséquent d'adapter la puissance à des conditions de références fixées une fois pour toutes. Il permet une normalisation des conditions de fonctionnement du circuit indispensable dans une utilisation industrielle. Le réglage du niveau de référence est effectué par commande entre 0 et 10 V avec une alimentation stabilisée en courant 41.

4) - Le coupleur directif 20 sépare l'onde réfléchie de l'onde incidente et permet une mesure de la puissance réfléchie. Il peut être remplacé par un circulateur si la puissance réfléchie est faible. Toutefois, la séparation des deux ondes par un coupleur directif est meilleure que par un circulateur mais celui-là ne prélève que 10% de la puissance réfléchie (coupleur à 10 dB), alors que le circulateur en transmet, au détecteur 42, la totalité.

5) - Le détecteur 42 du type diode contact ou diode Schottky doit être intégré de façon connue dans une monture adaptée et être protégé des perturbations électromagnétiques. Le signal électrique délivré par le détecteur 42 est envoyé sur un circuit électronique se composant d'un amplificateur 44 de gain de l'ordre de 100 et d'un filtre "passe bas" 28 du type R.C de constante de temps de l'ordre de la seconde (grande devant la fréquence de modulation de la source).

A la sortie de ce filtre, on obtient un signal continu, variant entre 0 et 15 volts et qui est proportionnel à la puissance moyenne réfléchie dans la bande de fréquence utilisée. Ce signal continu peut être utilisé tel quel et envoyé directement sur un enregistreur ou bien être converti en signal numérique à l'aide d'un convertisseur analogique/numérique 46 avant d'être envoyé sur un micro-ordinateur 48 pour calculer la viscosité du milieu visqueux.

Comme on l'a déjà dit, le dispositif de mesure et donc le capteur doivent être étalonnés en fonction du milieu visqueux à contrôler et du mode de réalisation choisi pour le capteur (figures 1 à 4).

Les inventeurs ont utilisé comme milieu test le glycérol parce qu'il présente une viscosité assez élevée à température ambiante (voisine de 0,1 Pa.s, c'est-à-dire de 1000 centipoises) et que cette viscosité dépend fortement de la température. D'autres essais ont été réalisés sur des résines époxy.

Les conditions de fonctionnement du dispositif de mesure sont fixées comme suit :
- la fréquence moyenne de fonctionnement du dispositif hyper-fréquence est choisie après une étude préalable qui permet de fixer une fréquence optimum entre 2 et 18 GHz. Pour le glycérol cette fréquence se situe entre 2 et 4 GHz, par contre pour les résines époxy cette fréquence se situe autour de 9,5 GHz.

Aussi, pour le glycérol, on choisit une fréquence moyenne de 3,5 GHZ. La source micro-onde 26 utilisée est un oscillateur contrôlé par YIG sur la bande 2-8 GHz. La tension de contrôle est fournie par le générateur de fonction 50 ; c'est une tension en dent de scie symétrique variant entre 1,2 et 3,7 volts. La fréquence de cette modulation est de 20 à 100 Hz ; la mesure de la viscosité ne change pas si la fréquence de modulation varie. Dans les courbes présentées ciaprès, on a utilisé des fréquences de modulation de 20 et 50 Hz.

La valeur de référence de la mesure est définie par exemple par le signal obtenu lorsque le capteur est en place, mais dans l'air. Cette valeur de signal est fixée à 10 volts au moyen de l'atténuateur variable 30 placé dans le circuit. (Il est à noter que pour la valeur de référence on peut utiliser un cour-circuit à la place du capteur, ce qui permet de contrôler la référence en cours de mesure sans avoir à nettoyer le capteur).

La figure 6 donne les variations de la viscosité $\eta$ en Pa.s du glycérol en fonction de la tension U (en volts) délivrée en sortie de l'ensemble de détection 24 et qui est représentative de la puissance des micro-ondes réfléchies par le milieu.

Cette même courbe a été obtenue au cours de plusieurs expériences en chauffant le glycérol pour en modifier sa viscosité. La reproductibilité de la mesure est bonne toutes sources d'erreur confondues (nettoyage et remise en place du capteur, fluctuations de la source, etc.). La fluctuation sur une mesure reste inférieure à 20 mV pour un signal de 1,80 V. La précision sur une mesure de viscosité est alors de $25.10^{-4}$ Pa.s (25 centipoises) entre 500 et $1000.10^{-4}$ Pa.s (soit entre 500 et 1000 centipoises).

Dans le cas des résines époxy, la fréquence de mesure est de 9,5 GHz ; la variation du signal est moins grande que dans le cas du glycérol (300 mV pour une variation de 1000 centipoises), la précision est par conséquent un peu moins bonne, de l'ordre de $50.10^{-4}$ Pa.s (50 centipoises) pour une viscosité variant de 500 à $1500.10^{-4}$ Pa.s (500 à 1500 centipoises).

Sur la figure 7, on a donné les variations de la viscosité $\eta$ (en Pa.s) d'une résine époxy polymérisable en fonction de la tension U (en volts) délivrée en sortie de l'ensemble de détection 24. L'échelle en ordonnée est de 20 mV/cm, mais les origines ont été décalées de façon à ce que tous les points exprimentaux se placent sur une même courbe.

Cette courbe a été obtenue quelle que soit la fréquence de mesure utilisée ; ceci prouve que le rapport d'une variation du signal micro-onde réfléchi par le milieu visqueux sur la variation de la viscosité de ce milieu est indépendant de la fréquence. Ce rapport représente la sensibilité de la mesure.

Cette sensibilité est ici de 6,8 mV/$10^{-1}$ Pa.s, comme cela ressort clairement de la figure 8 qui donne les variations de la tension U (en volts) délivrée par l'ensemble de détection 24 en fonction de la fréquence F (en GHz) micro-onde utilisée, pour une résine époxy ayant une viscosite de 0,1 Pa.s (3000 cps). Les fluctuations sur une mesure micro-onde étant de l'ordre de 10 mV, on peut mesurer une viscosité à environ $13 \times 10^{-3}$ Pa.s (130 cps) près. Cette précision est du même ordre de grandeur que celle obtenue avec des viscosimèttres rotatifs classiques.

Comme on l'a dit précédemment, la relation qui lie la puissance Pr des micro-ondes réfléchies sur le capteur par le milieu visqueux avec les propriétés diélectriques du milieu est établie par étalonnage. Dans le cas d'une résine époxy, la puissance Pr est liée à la viscosité par une formule du type :

$$Pr = k \log. \eta + C,$$

où C est une constante liée au milieu visqueux et k une constante liée au capteur.

Le capteur de l'invention peut fonctionner dans une gamme de viscosité allant de $10^{-2}$ Pa.s (100 cps) à 10 Pa.s ($10^5$ cps).

Le domaine d'utilisation du capteur de l'invention couvre tout l'éventail des milieux liquides polaires et en particulier des polymères dipolaires.

En particulier, le dispositif de l'invention peut être utilisé pour le contrôle du vieillissement de résines dans les bacs d'imprégnation, le contrôle de polymérisation dans des enceintes thermiques, les contrôles de viscosité des colles, des peintures à base de polymères, etc.

## Revendications

1. Dispositif de mesure en continu de la viscosité d'un milieu visqueux polaire (22) comportant une source micro-onde (26), un capteur de mesure comportant essentiellement au moins un câble coaxial micro-onde semi-rigide (2, 2a, 2b, 2c, 2d) destiné à être immergé dans le milieu et des moyens de connexion (10, 10a, 10b), ce câble étant constitué d'une enveloppe externe (4, 4c, 4d) et d'une âme (6, 6c, 6d) conductrices de l'électricité et disposées coaxialement, l'espace défini entre l'enveloppe et âme étant rempli d'un diélectrique (8), l'âme comportant une extrémité dénudée (12, 12a, 12b, 12c, 12d) destinée à être placée au contact du milieu visqueux et formant une boucle magnétique fermée en court-circuit avec l'enveloppe externe (4c, 4d), ce capteur étant destiné à engendrer dans ce milieu des micro-ondes incidentes de puissance donnée et à détecter la puissance des micro-ondes réfléchies par le milieu, un détecteur (42) pour transformer la puissance des micro-ondes réfléchies en un signal électrique qui est une fonction croissante de la viscosité, un premier guide micro-onde (34, 36, 38) pour coupler la source micro-onde au capteur et un second guide micro-onde (40) pour coupler le détecteur au capteur.

2. Dispositif selon la revendication 1, caractérisé en ce que le capteur comprend un seul et unique câble coaxial (2, 2c, 2d).

3. Dispositif selon la revendication 1 ou 2, caractérisé en ce que âme et l'enveloppe externe du capteur sont en cuivre éventuellement argenté ou chromé et le diélectrique du capteur est du polytétrafluoroéthylène.

4. Dispositif selon l'une quelconque des revendications 1 à 3, caractérisé en ce que le câble coaxial présente un diamètre externe inférieur à 5 mm.

5. Dispositif selon l'une quelconque des revendications 1 à 4, caractérisé en ce que la source micro-onde (26) est un oscillateur contrôlé en fréquence par YIG.

6. Dispositif selon l'une quelconque des revendications 1 à 5, caractérisé en ce qu'il comprend en outre un isolateur micro-onde (32) connecté entre la source micro-onde (26) et le capteur.

7. Dispositif selon l'une quelconque des revendications 1 à 6, caractérisé en ce qu'il comprend en outre un atténuateur (30) de la puissance micro-onde connecté entre la source micro-onde et le capteur.

8. Dispositif selon l'une quelconque des revendications 1 à 7, caractérisé en ce qu'il comprend de plus un filtre (28) pour filtrer le signal électrique délivré par le détecteur (42).

9. Dispositif selon l'une quelconque des revendications 1 à 8, caractérisé en ce qu'il comprend un coupleur directif (20) entre d'une part la source micro-onde (26) et le capteur et d'autre part le détecteur (42) et le capteur, lorsque ledit capteur comprend un seul et unique câble coaxial (2, 2c, 2d).

10. Dispositif selon l'une quelconque des revendications 1 à 9, caractérisé en ce que la source micro-onde est modulée en fréquence sur une bande de fréquence de 1 GHz autour de la fréquence de fonctionnement.

**Patentansprüche**

1. Vorrichtung zur kontinuierlichen Messung der Viskosität eines polaren viskosen Mediums (22) umfassend eine Mikrowellenquelle (26), eine Meßzelle, die im wesentlichen mindestens ein halbstarres Mikrowellen-Koaxialkabel (2,2a,2b, 2c,2d), das dazu bestimmt ist, in das Medium eingetaucht zu werden und Verbindungsvorrichtungen (10,10a,10b) enthält, wobei das Kabel aus einer äußeren Hülle (4,4c,4d) und einem elektrische leitfähigen Kern (6,6c,6d) in koaxialer Anordnung besteht, und der zwischen der Hülle und dem Kern befindliche Raum mit einem Dielektrikum (8) gefüllt ist, wobei der Kern ein abisoliertes Ende (12,12a, 12b, 12c, 12d) beinhaltet, das dazu bestimmt ist, in Kontakt mit dem viskosen Medium gebracht zu werden und eine mit der äußeren Hülle (4c,4d) kurzgeschlossene, magnetische Schleife zu bilden, wobei die Meßzelle dazu bestimmt ist, in dieses Medium einfallende Mikrowellen mit gegebener Energie zu erzeugen und die Energie der vom Medium reflektierten Mikrowellen zu ermitteln, einen Detektor (42) zur Umwandlung der Energie der reflektierten Mikrowellen in ein elektrisches Signal, das eine steigende Funktion der Viskosität ist, einen ersten Mikrowellenleiter (34,36,38) zur Kopplung der Mikrowellenquelle mit der Meßzelle und einen zweiten Mikrowellenleiter (40) zur Kopplung des Detektors mit der Meßzelle.

2. Vorrichtung nach Anspruch 1, **dadurch gekennzeichnet, daß** die Meßzelle ein einziges Koaxialkabel (2,2c,2d) umfaßt.

3. Vorrichtung nach Anspruch 1 oder 2, **dadurch gekennzeichnet, daß** der Kern und die äußere Hülle der Meßzelle aus Kupfer bestehen, das gegebenenfalls versilbert oder verchromt ist, und daß das Dielektrikum der Meßzelle aus Polytetrafluorethylen besteht.

4. Vorrichtung nach einem der Ansprüche 1 bis 3, **dadurch gekennzeichnet, daß** das Koaxialkabel einen äußeren Durchmesser von weniger als 5 mm besitzt.

5. Vorrichtung nach einem der Ansprüche 1 bis 4, **dadurch gekennzeichnet, daß** die Mikrowellenquelle (26) ein durch YIG frequenzgesteuerter Oszillator ist.

6. Vorrichtung nach einem der Ansprüche 1 bis 5, **dadurch gekennzeichnet, daß** sie ferner einen zwischen der Mikrowelle (26) und der Meßzelle angeschlossenen Mikrowellenisolator (32) umfaßt.

7. Vorrichtung nach einem der Ansprüche 1 bis 6, **dadurch gekennzeichnet, daß** sie ferner ein zwischen der Mikrowellenquelle und der Meßzelle angeschlossenes Dämpfungsglied (30) der Mikrowellenenergie umfaßt.

8. Vorrichtung nach einem der Ansprüche 1 bis 7, **dadurch gekennzeichnet, daß** sie ferner ein Filter (28) zum Filtern des vom Detektor (42) gelieferten elektrischen Signals umfaßt.

9. Vorrichtung nach einem der Ansprüche 1 bis 8, **dadurch gekennzeichnet, daß** sie einen Richtkoppler (20) einerseits zwischen der Mikrowellenquelle (26) und der Meßzelle und andererseits zwischen dem Detektor (42) und der Meßzelle umfaßt, wenn die Meßzelle ein einziges Koaxialkabel (2, 2c, 2d) umfaßt.

10. Vorrichtung nach einem der Ansprüche 1 bis 9, **dadurch gekennzeichnet, daß** die Mikrowellenquelle in einem Frequenzband von 1 GHz um die Betriebsfrequenz herum frequenzmoduliert ist.

**Claims**

1. Device for the continuous measurement of the viscosity of a polar viscous medium (22) having a microwave source (26), a sensor essentially having at least one semi-rigid, coaxial microwave cable (2, 2a, 2b, 2c, 2d) for immersion in the medium and connecting means (10, 10a, 10b), said cable being constituted by an outer sheath (4, 4c, 4d) and a core (6, 6c, 6d) which conduct electricity and which are arranged coaxially, the space defined between the sheath and the core being filled with a dielectric (8), the core having a bare end (12, 12a, 12b, 12c, 12d) which is placed in contact with the viscous medium and forming a magnetic loop closed in short-circuit with the outer sheath (4c, 4d), said sensor being intended to produce in said medium incident microwaves of a given power and to detect the power of the microwaves reflected by the medium, a detector (42) being provided for transforming the power of the reflected microwaves into an electric signal which is a rising function of the viscosity, a first microwave guide (34, 36, 38) is provided for coupling the microwave source to the sensor and a second microwave guide (40) is provided for coupling the detector to the sensor.

2. Device according to claim 1, characterized in that the sensor comprises a single coaxial cable (2, 2c, 2d).

3. Device according to claim 1 or 2, characterized in that the core and outer sheath of the sensor are made from copper, optionally plated with silver or chromium and the sensor dielectric is polytetrafluoroethylene.

4. Device according to any one of the claims 1 to 3, characterized in that the coaxial cable has an external diameter below 5 mm.

5. Device according to any one of the claims 1 to 4, characterized in that the microwave source (26) is a YIG frequency controlled oscillator.

6. Device according to any one of the claims 1 to 5, characterized in that it also comprises a microwave insulator (32) connected between the microwave source (26) and the sensor.

7. Device according to any one of the clams 1 to 6, characterized in that it also comprises an attenuator (30) of the microwave power connected between the microwave source and the sensor.

8. Device according to any one of the claims 1 to 7, characterized in that it also comprises a filter (28) for filtering the electric signal supplied by the detector (42).

9. Device according to any one of the claims 1 to 8, characterized in that it comprises a directional coupler (20) between on the one hand the microwave source (26) and the sensor and on the other hand the detector (42) and the sensor, when said sensor comprises a single coaxial cable (2, 2c, 2d).

10. Device according to any one of the claims 1 to 9, characterized in that the microwave source is frequency modulated on a 1 GHz frequency band around the operating frequency.

FIG. 2

FIG. 1

10

2c

4c

16C

6C

e

e

12C

FIG. 3

10

2d

4d

16d

6d

12d

FIG. 4

FIG. 5

EP 0 408 438 B1

FIG. 6

FIG. 7

FIG. 8